**Europäisches Patentamt**

**European Patent Office**

**Office européen des brevets**

(19)

(11) Veröffentlichungsnummer : **0 360 997 B1**

(12) # EUROPÄISCHE PATENTSCHRIFT

(45) Veröffentlichungstag der Patentschrift :
**25.03.92 Patentblatt 92/13**

(51) Int. Cl.$^5$ : **B60J 10/08**

(21) Anmeldenummer : **89113206.0**

(22) Anmeldetag : **19.07.89**

(54) Scheibeneinfassprofil.

(30) Priorität : **17.09.88 DE 8811843 U**

(43) Veröffentlichungstag der Anmeldung :
**04.04.90 Patentblatt 90/14**

(45) Bekanntmachung des Hinweises auf die
Patenterteilung :
**25.03.92 Patentblatt 92/13**

(84) Benannte Vertragsstaaten :
**AT CH DE ES FR GB IT LI NL SE**

(56) Entgegenhaltungen :
**DE-A- 2 103 880**
**US-A- 3 167 825**
**US-A- 3 603 035**

(73) Patentinhaber : **REHAU AG + Co**
**Rheniumhaus**
**W-8673 Rehau (DE)**

(72) Erfinder : **Der Erfinder hat auf seine Nennung**
**verzichtet**

EP 0 360 997 B1

## Beschreibung

Die Erfindung betrifft ein Scheibeneinfaßprofil aus polymerem Werkstoff mit einem hart eingestellten Halteteil und einem einseitig mit dem Halteteil verbundenen Dichtungsbalg, wobei der Dichtungsbalg aus weich eingestelltem Werkstoff besteht und über einen flexiblen Haltesteg an das Halteteil angelenkt ist und wobei in die lichte Öffnung des Dichtungsbalges eine an dessen Innenwand anliegende Einlage aus elastischem Werkstoff eingebracht ist.

Aus der DE-A- 32 23 155 ist eine Scheibeneinfassung bekannt, die mit einem Halteteil den äußeren Rand der Scheibe übergreift und über einen flexiblen Verbindungssteg mit einem Dichtungsbalg verbunden ist, welcher die Abdichtung gegenüber dem zugeordneten Karosserieausschnitt übernimmt. Die Scheibe selbst mit dem randseitig aufgesetzten Einfaßprofil ist in die Karosserieöffnung eingesetzt und dort mittels eines Kleberwulstes befestigt.

Das bekannte Scheibeneinfaßprofil ergibt eine ausreichende Abdichtung zwischen dem Scheibenrand und der zugeordneten Karosseriefläche in geradlinig verlaufenden oder leicht gekrümmten Einsatzbereichen. Bei starken Krümmungen jedoch verflacht der Dichtungsbalg mit zunehmendem Krümmungsradius aufgrund der weichen Einstellung des zu seiner Herstellung verwendeten Werkstoffes, z. B. Polyvinylchlorid weich. Diese Verflachung hat aber zur Folge, daß der abzudichtende Spalt zwischen Scheibenrand und Karosserieoberfläche mit zunehmender Verflachung des Dichtungsbalges nicht mehr vollständig überbrückt wird. Es entstehen so in den starken Krümmungsbereichen Spaltöffnungen zwischen Scheibe und zugeordneter Karosserieoberfläche, die den negativen Eintritt von Feuchtigkeit, Schmutzpartikeln usw. in diesen Bereichen ermöglichen. Dadurch kann die Klebewulst, mittels derer die Scheibe in den Karosserieöffnungen festgehaltert ist, negativ beeinflußt werden.

Aus der US-A- 3 167 825 ist ein Dichtungsschlauch für derartige Einsatzzwecke bekannt, der aus zwei Schichten hergestellt ist. Die äußere Schicht kann bei dieser Dichtung aus Polyvinylchlorid weich bestehen, während die innere Schicht aus geschäumtem Gummi besteht. Auch bei einem solchen Aufbau des Dichtungsschlauches ist bei starken Krümmungen die negative Verflachung des Dichtungsbalges mit ihren Folgen nicht auszuschließen.

Diesem Stand der Technik gegenüber hat sich die Erfindung die Aufgabe gestellt, ein Scheibeneinfaßprofil anzugeben, bei dem eine spaltöffnende Abflachung des Dichtungsbalges auch im Bereich der stärksten vorkommenden Fensterradien nicht mehr zu befürchten ist. Erfindungsgemäß wird dazu vorgeschlagen, daß die Einlage an der Innenwand des Dichtungsbalges gleitbeweglich anliegt. Vorteilhaft wird als Einlage ein Schlauch aus elastomerem Werkstoff verwendet. Es liegt jedoch auch im Rahmen der Erfindung, ein kompaktes, stabähnliches Gebilde aus elastomerem Werkstoff in die lichte Öffnung des Dichtungsbalges einzusetzen.

Das Scheibeneinfaßprofil der Erfindung kann einfach im Wege des Koextrusionsverfahrens als einstückiges Profil hergestellt werden. Mit diesem Verfahren wird das Halteteil aus hartem und der über den weich eingestellten Verbindungssteg mit dem Halteteil verbundene, ebenfalls weich eingestellte Dichtungsbalg im Urformprozeß einstückig erzeugt, wobei gleichzeitig über einen Querspritzkopf die Einlage aus elastischem Werkstoff in die lichte Weite des Dichtungsbalges eingelassen wird. Da diese elastomere Einlage beim Einlauf in den lichten Querschnitt des Dichtungsbalges trotz der vorhandenen Extrusionswärme mit dessen Innenwandung keine Verbindung eingeht, ergibt sich letztendlich der Vorteil, daß nach Erkalten des Dichtungsbalges die Einlage zwar fest, aber im Belastungsfall gleitbeweglich an der inneren Umfangsfläche des Dichtungsbalges anliegt. Es liegt im Rahmen der Erfindung, daß die Einlage auch nachträglich in den lichten Querschnitt des Dichtungsbalges des Scheibeneinfaßprofils eingeschoben werden kann.

Der erfinderische Aufbau des Dichtungsbalges hat zur Folge, daß beim Biegen des Scheibeneinfaßprofils um Scheibenradien keine die Abdichtfunktion des Profils gegenüber der Karosserie beeinträchtigende Abflachung des Dichtungsbalges mehr auftritt. Darüberhinaus hat es sich als vorteilhaft herausgestellt, daß durch die über die Einlage erhöhte Eigensteifigkeit des Dichtungsbalges bei der Montage des Fensters der Dichtungsbalg durch das Gewicht der Scheibe nicht mehr zusammengedrückt werden kann. Dieser Umstand läßt es zu, auf die sonst bei der Montage solcher Scheiben verwendeten Distanzstücke, Keile usw. zu verzichten. Darüberhinaus hat es sich als sehr vorteilhaft erwiesen, daß die Einlage aus elastomerem Werkstoff die Funktion des Dichtungsbalges auch noch bei hohen Temperaturen bewährleistet. So kann z. B. eine Karosserie, in deren Fensteröffnungen Fensterscheiben unter Verwendung des erfindungsgemäßen Scheibeneinfaßprofils über die Klebewülste fest eingesetzt sind, ohne weiteres in einem Nachlackierofen behandelt werden. Die dabei auftretenden hohen Temperaturen beeinträchtigen die Abdichtung zwischen den Scheibenrändern und den zugeordneten Karosserieoberflächen nicht. Ohne die elastomere Einlage gemäß der Erfindung würde der Dichtungsbalg, der ja in der Regel aus weich eingestelltem Polyvinylchlorid hergestellt ist, den im Nachlackierofen auftretenden Temperaturen nicht standhalten, so daß auch in diesem Fall eine Aufhebung der Dichtwirkung eintreten würde.

Mit dem erfindungsgemäßen Scheibeneinfaßprofil steht damit eine Profilform zur Verfügung, die die Montagefreundlichkeit solcher Bauteile erheblich erhöht, die eine Langzeitabdichtung im Einsatzbereich auch bei den dabei auftretenden Temperaturschwankungen gewährleistet und die bei temperaturintensiven Nachbehandlungen der Karosserie die mit der Montage erzielte umlaufende Dichtwirkung nicht verliert.

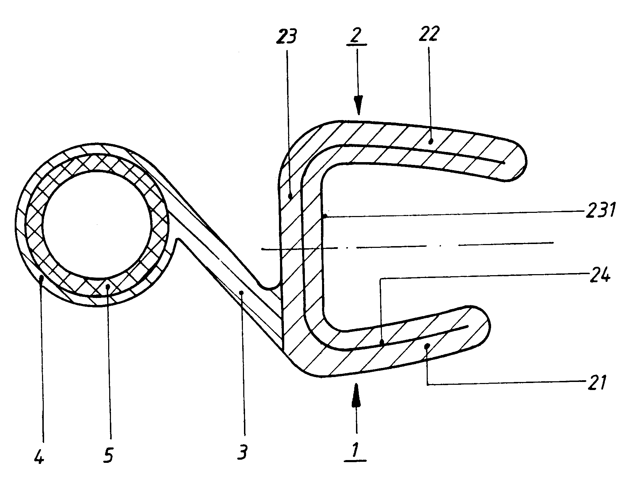

In der Zeichnung ist eine Querschnittsdarstellung des Scheibeneinfaßprofils 1 dargestellt. Das Scheibeneinfaßprofil 1 besteht aus dem hart eingestellten Halteteil 2, welches U-förmig gestaltet ist und mit seinen U-Schenkeln 21, 22 den in der Zeichnung nicht dargestellten Scheibenrand umfaßt. Der Halteteil 2 kann mit seinen U-Schenkeln 21, 22 bis zur Innenseite 231 des Basisschenkels 23 über den Scheibenrand geführt sein. In das Halteteil 2 ist ein metallisches, U-förmiges Verstärkungsprofil 24 eingelassen. Dieses Verstärkungsprofil 24 kann ebenfalls im Urformprozeß über einen Querspritzkopf in das Halteteil 2 eingeführt werden.

Das Halteteil 2 ist im Außenbereich des Basisschenkels 23 über den flexiblen Verbindungssteg 3 mit dem ebenfalls aus flexiblem Material gefertigten Dichtungsbalg 4 einstückig verbunden. In den Dichtungsbalg 4 ist die Einlage 5 derart eingesetzt, daß die äußere Umfangsfläche der Einlage 5 an der inneren Umfangsfläche des Dichtungsbalges 4 anliegt. Die Einlage 5 besteht in der gezeigten Darstellung aus einem Schlauch aus elastomerem Material. Die gezeigten Raumformen der beschriebenen Einzelteile des Scheibeneinfaßprofils sind nur beispielhaft wiedergegeben. So können z. B. das Halteteil 2, der Dichtungsbalg 4 und die Einlage 5 beliebig andere Querschnittsformen aufweisen. Für die Erfindung wesentlich ist, daß bei Abbiegungen des Halteteils 2 über Radiusbereiche des Randes der Fensterscheibe ein schädliches Abflachen im Querschnitt des Dichtungsbalges verhindert wird.

## Patentansprüche

1. Scheibeneinfaßprofil (1) aus polymerem Werkstoff mit einem hart eingestellten Halteteil (2) und einem einseitig mit dem Halteteil verbundenen Dichtungsbalg (4), wobei der Dichtungsbalg aus weich eingestelltem Werkstoff besteht und über einen flexiblen Haltesteg (3) an das Halteteil (2) angelenkt ist und wobei in die lichte Öffnung des Dichtungsbalges (4) eine an dessen Innenwand anliegende Einlage (5) aus elastischem Werkstoff eingebracht ist, dadurch gekennzeichnet, daß die Einlage (5) an der Innenwand des Dichtungsbalges (4) gleitbeweglich anliegt.

2. Scheibeneinfaßprofil nach Anspruch 1, dadurch gekennzeichnet, daß die Einlage (5) ein Schlauch aus elastomerem Werkstoff ist.

## Claims

1. Frame extrusion (1) of polymer material comprising a rigid formed retaining channel (2) and a hollow sealing strip (4) connected to one side of the retaining channel whereby the sealing strip is formed of a soft material and is linked to the rigid retaining channel (2) by a flexible support web (3) and whereby the sealing strip (4) is provided with an insert (5) which lines the inner wall of the sealing strip (4) characterised by the fact that the insert (5) is slidingly juxtaposed to the inner wall.

2. Frame extrusion as in claim 1 characterised by the fact that the insert (5) takes the form of a hose of elastomer material.

## Revendications

1. Profilé à encadrement de vitre (1) en matière polymère avec une pièce de retenue dure (2) et un soufflet d'étanchéité (4) relié d'un côté à la pièce de retenue, le soufflet d'étanchéité étant en matière tendre et articulé sur la pièce de retenue (2) par une barrette de retenue (3) flexible, une doublure (5) en matière élastique, adhérant à la paroi intérieure du soufflet d'étanchéité étant installée dans l'ouverture de passage de celui-ci, caractérisé par le fait que la doublure (5) sur la paroi intérieure du soufflet d'étanchéité (4) est mobile dans un mouvement de glissement.

2. Profilé à encadrement de vitre selon la revendication 1, caractérisée par le fait que la doublure (5) est un flexible en élastomère.